# EUROPÄISCHE PATENTSCHRIFT

(11) **EP 4 158 770 B1**
(45) Veröffentlichungstag und Bekanntmachung des Hinweises auf die Patenterteilung: **09.07.2025**
(21) Anmeldenummer: 21723712.2
(22) Anmeldetag: 04.05.2021
(51) Int. Cl.: H02P 6/10, H02P 21/05

(54) **VERFAHREN ZUM BETRIEB EINES ANTRIEBSSTRANGS UND FAHRZEUGANTRIEBSSTRANG MIT ELEKTROMOTORISCHEM ANTRIEB**
METHOD FOR OPERATING A DRIVE TRAIN, AND VEHICLE DRIVE TRAIN WITH ELECTROMOTIVE DRIVE
PROCÉDÉ DE FONCTIONNEMENT D'UNE TRANSMISSION ET TRANSMISSION DE VÉHICULE À ENTRAÎNEMENT ÉLECTROMOTEUR

(30) Priorität: 28.05.2020 DE 102020206669
(43) Veröffentlichungstag der Anmeldung: 05.04.2023
(73) Patentinhaber: Robert Bosch GmbH, 70442 Stuttgart (DE)
(72) Erfinder: FASSNACHT, Jochen, 75365 Calw (DE); GAENZLE, David, 70771 Leinfelden-Echterdingen (DE); MANDERLA, Maximilian, 71638 Ludwigsburg (DE)
(86) Internationale Anmeldenummer: PCT/EP2021/061683
(87) Internationale Veröffentlichungsnummer: WO 2021/239406

(56) Entgegenhaltungen:
- EP-A2- 2 007 005
- DE-A1- 102015 119 167
- DE-A1- 102016 211 394

## Beschreibung

### Stand der Technik

Die Erfindung betrifft ein Verfahren zum Betrieb eines Antriebsstrangs nach dem Oberbegriff des Anspruchs 1. Ferner betrifft die Erfindung gemäß dem Oberbegriff des Anspruchs 8 einen Fahrzeugantriebsstrang mit elektromotorischen Antrieb.

DE 10 2016 211 394 A1 offenbart ein Verfahren und eine Vorrichtung nach den Oberbegriffen der Ansprüche 1 und 8.

DE 10 2015 119 167 A1 offenbart ein Verfahren und ein System zur Kompensation von Drehmomentwelligkeit eines Fahrmotors eines batterieelektrischen Fahrzeugs, das keine Kraftmaschine aufweist.

EP 2 007 005 A2 offenbart eine Motorsteuerungsvorrichtung zur Durchführung einer Vektorsteuerung für einen Motor, der eine Last antreibt, deren Lastmoment periodisch schwankt. Der Motor ist ein dreiphasiger Synchronmotor mit Permanentmagneten.

Bei elektrischen Fahrzeugantriebssträngen fällt gegenüber Fahrzeugen mit Verbrennungsmotor der Verbrennungsmotor als Geräuschquelle weg und wird durch den deutlich leiseren Elektromotor ersetzt. Somit stören nun auch Geräusche, welche beim verbrennungsmotorischen Antriebsstrang nicht auffielen, da der Verbrennungsmotor oder seine Nebenaggregate sie übertönt haben. Dies gilt besonders bei geringen Fahrgeschwindigkeiten des Fahrzeugs, da bei hohen Geschwindigkeiten die Reifenabrollgeräusche und Windgeräusche dominieren und eventuelle Zusatzgeräusche überdecken.

DE 10 2015 207 632 A1 betrifft eine Vorrichtung zur Verringerung von Zahnradgeräuschen eines mit einem Abtriebszahnrad in Zahneingriff stehenden Antriebszahnrades, wobei Kräfte von den Zahnrädern über ein Auflager in ein Gehäuse einleitbar sind, wobei die Vorrichtung eine Sensoreinrichtung, eine Regeleinrichtung und einen Aktuator aufweist und wobei mittels der Sensoreinrichtung ein dynamisches Schwingungssignal erfassbar ist und das Schwingungssignal der Regeleinrichtung zuführbar ist, wobei mittels der Regeleinrichtung ein Schwingungsverringerungssignal erzeugbar ist, das dem Aktuator zuführbar ist, wobei der Aktuator derart an oder in dem Auflager angeordnet ist, dass Kräfte von den Zahnrädern über den Aktuator in das Gehäuse übertragbar sind, wobei mittels des Aktuators aktiv eine relative Verschiebung und/oder eine Kraftbeaufschlagung einer von dem Auflager getragenen Komponente bewirkbar ist. Die Vorrichtung ist zur Verwendung des Aktuators auch als Sensoreinrichtung eingerichtet.

### Offenbarung der Erfindung

Aufgabe der Erfindung ist es, ein Verfahren zur Verfügung zu stellen und eine Vorrichtung zu schaffen, die es ermöglichen, einen - insbesondere ausschließlich - elektromotorisch betriebenen Antriebsstrang zu betreiben.

Das der Erfindung zugrundeliegende Problem wird durch ein Verfahren mit den Merkmalen des Anspruchs 1 und einen Fahrzeugantriebsstrang mit den Merkmalen des Anspruchs 8 gelöst. Vorteilhafte Weiterbildungen der Erfindung sind in Unteransprüchen angegeben.

Erfindungsgemäß sieht ein Verfahren zum Betrieb eines Antriebsstrangs mit elektromotorischem Antrieb vor, dass
eine Drehzahl und ein Antriebsmoment des Antriebs über eine verzahnte Getriebestufe für einen Abtrieb wandelbar sind, und
der Antrieb mit einem Ansteuerungssignal angesteuert wird.

Dem Ansteuerungssignal wird ein periodisches Drehmomentänderungssignal überlagert, das das Antriebsmoment wechselweise verringert und verstärkt und dabei in Phase mit einer Zahnsteifigkeitsänderung der verzahnten Getriebestufe ist, wobei eine Signalstärke des Drehmomentänderungssignals bei sich verringernder Zahnsteifigkeit geringer ist als bei sich erhöhender Zahnsteifigkeit.

Dabei wird eine verbesserte Geräuschreduzierung erzielt, indem vorgesehen ist,
dass das periodische Drehmomentänderungssignal die Zahnsteifigkeit nachbildet und in einer Tabelle abgelegt ist oder durch eine mathematische Funktion beschrieben ist, mit der die Zahnsteifigkeit angenähert ist.

Ein Vorteil des Verfahrens ist, dass sich kein oder kaum ein störendes Geräusch aufgrund der variablen Zahnsteifigkeit beim Abrollen von zwei Getriebezahnrädern ergibt. Ein solches Geräusch wäre tonal und nähme mit steigendem Drehmoment zu, welches über die Getriebestufe übertragen wird. Die Zahnsteifigkeit ändert sich nämlich periodisch über jedes einzelne Zahnpaar, welches gerade im Eingriff ist.

Die Frequenz dieser Änderung ist somit bei einfachen Stirnradstufen die Drehzahl des Zahnrades multipliziert mit seiner Zähnezahl.

Ein Vorteil der Erfindung ist, dass sie weder Zusatzkosten noch ein Zusatzgewicht verursacht und rein über eine Softwareerweiterung umgesetzt werden kann. Die Software kann auch noch sehr spät im Entwicklungsprozess oder sogar nachträglich, z.B. als Softwareupdate für im Feld befindliche Fahrzeuge, implementiert werden. Der Rechenressourcenaufwand auf dem Steuergerät hierfür ist gering. Als Signale sind nur die Rotorlage und die Lage der Zahnräder hierzu, die über die Konstruktion festgelegt ist, und ein Schätzwert des Drehmoments nötig. Das Drehmoment der elektrischen Maschine kann von der feldorientierten Regelung geschätzt werden und die Rotorlage wird für diese ebenfalls gemessen oder geschätzt. Es sind also prinzipiell keine zusätzlichen Sensoren nötig.

Das erfindungsgemäße Verfahren kann auch bei anderen Antriebssträngen mit elektrischen Maschinen eingesetzt werden, die ein Getriebe aufweisen, jedoch keinen Verbrennungsmotor. Ein solcher Antriebsstrang kann beispielsweise ein Antriebsstrang aus der Industrietechnik oder auch der weißen Ware sein. Bei der weißen Ware handelt es sich u.a. um Kühlschränke, Gefrierschränke etc., deren Kältemittelkompressor elektromotorisch angetrieben wird. Bei der weißen Ware handelt es sich aber auch um Waschmaschinen und Geschirrspülmaschinen, deren Pumpe bzw. Trommel elektromotorisch angetrieben wird. Außerdem kann der erfindungsgemäße Antriebsstrang auch bei Elektrowerkzeugen mit Getriebe Anwendung finden. Zu solchen Elektrowerkzeugen mit Getriebe gehören insbesondere Bohrmaschinen. Jedoch können beispielsweise auch Elektrosägen und Schleifmaschinen solche Antriebsstränge jeweils mit Getriebe aufweisen.

Gemäß einer Weiterbildung ist vorgesehen, dass das Ansteuerungssignal ein Drehmomentregelsignal einer Drehmomentregelung oder ein Ausgangsspannungssignal einer Drehmomentregelung ist. Solche Ansteuerungssignale sind bei typischen elektromotorischen Antrieben von Vorteil.

Gemäß einer Weiterbildung ist vorgesehen, dass das Ausgangsspannungssignal oder das Drehmomentregelsignal der Drehmomentregelung einer feldorientierten Drehmomentregelung oder Stromregelung zugehörig ist. Durch eine feldorientierte Drehmomentregelung oder Stromregelung wird erreicht, dass mit einem Frequenzumrichter für den elektromotorischen Antrieb dessen Drehzahl- und Positioniergenauigkeit verbessert wird.

Gemäß einer Weiterbildung ist vorgesehen, dass das periodische Drehmomentänderungssignal dem Ansteuerungssignal in Abhängigkeit von einem Drehmomentsollwert oder einer Rotorposition des Antriebs überlagert wird. Diese Abhängigkeit vom Drehmoment ist von besonderem Vorteil, da sich der Einfluss der Zahnsteifigkeitsänderung mit dem übertragenen Drehmoment des Getriebes ändert. Insofern kann die Amplitude des Drehmomentänderungssignals entsprechend dem sich gegebenenfalls ändernden Drehmoment angepasst werden.

Gemäß einer Weiterbildung ist vorgesehen, dass das periodische Drehmomentänderungssignal eine Sinusform aufweist. Ein sinusförmiges Signal lässt sich besonders einfach regeln.

Ebenfalls für eine verbesserte Geräuschreduzierung kann vorgesehen sein, dass ein Gleichwert des periodischen Drehmomentänderungssignals gleich null ist.

Für eine besonders gute Funktion einer feldorientierten Drehmomentregelung über den gesamten Drehzahlbereich kann vorgesehen sein, dass zur Regelung des Antriebsstrangs über ein geeignetes Streckenmodell und eine Subtraktion von dessen Ausgangssignal vom Messsignal der realen Strecke eine Auswirkung einer Geräuschdämpfung auf die reale Strecke für eine feldorientierte Drehmomentregelung des Antriebs ausblendbar ist.

Erfindungsgemäß umfasst ein Fahrzeugantriebsstrang mit elektromotorischem Antrieb:
einen Antrieb, dessen Antriebsmoment und dessen Drehzahl veränderlich sind,
eine verzahnte Getriebestufe, die zur Wandlung der Drehzahl und des Antriebsmoments an den Antrieb koppelbar ist,
ein Steuergerät zur Ansteuerung des Antriebs mit einem Ansteuerungssignal.

Dabei ist vorgesehen, dass das Steuergerät konfiguriert ist, dem Ansteuerungssignal ein periodisches Drehmomentänderungssignal überlagerbar ist, das das Antriebsmoment wechselweise verringert und verstärkt und dabei in Phase mit einer Zahnsteifigkeitsänderung der verzahnten Getriebestufe ist, und dass eine Signalstärke des Drehmomentänderungssignals bei sich verringernder Zahnsteifigkeit geringer ist als bei sich erhöhender Zahnsteifigkeit. Dabei wird eine verbesserte Geräuschreduzierung erzielt, indem vorgesehen ist, dass das periodische Drehmomentänderungssignal die Zahnsteifigkeit nachbildet und in einer Tabelle abgelegt ist oder durch eine mathematische Funktion beschrieben ist, mit der die Zahnsteifigkeit angenähert ist.

Um störenden Geräusche weiter zu reduzieren, können verschiedene weitere konstruktive Maßnahmen umgesetzt werden. So kann beispielsweise die Überdeckung der Zähne der Zahnräder erhöht werden. Außerdem kann das Getriebegehäuse verstärkt werden. Die mit einer Gehäuseverstärkung verbundenen zusätzlichen Kosten können durch die erfindungsgemäße Ausgestaltung reduziert werden.

Die Erfindung ermöglicht es, einen trotz Geradverzahnung laufruhigen Antriebsstrang zu schaffen und so die zusätzlichen Kosten für eine Schrägverzahnung einzusparen. Jedoch kann auch bei einem erfindungsgemäßen Antriebsstrang eine Schrägverzahnung verwendet werden. Gegenüber einer Geradverzahnung wird mit einer Schrägverzahnung eine bessere Laufruhe und geringere Geräuschentwicklung erreicht, da jedes Zahnpaar mit einem kontinuierlichen Übergang in und aus dem Eingriff läuft. Somit wird das Drehmoment gleichmäßiger übertragen als bei einer Geradverzahnung.

Sowohl das Verfahren als auch die Vorrichtung können Anwendung bei einem Fahrzeugantriebsstrang finden, der ausschließlich elektromotorisch betrieben ist. D. h., dass die Getriebestufe nicht mit einem Verbrennungsmotor gekoppelt werden kann.

Nachfolgend werden mögliche Ausführungsformen der Erfindung unter Bezugnahme auf die Zeichnungen erläutert.

Es zeigen:
Fig. 1 einen Fahrzeugantriebsstrang, der ein Antrieb und ein zugehöriges Steuergerät mit einer Geräuschdämpfung aufweist;
Fig. 2 anhand eines Blockschaltbildes die Integration einer Geräuschdämpfung in den Fahrzeugantriebsstrang nach Fig. 1, wobei ein stationäres Drehmomentänderungssignal nachgebildet wird;
Fig. 3 anhand eines Blockschaltbildes eine weitere Ausführungsform, bei der die Integration einer Geräuschdämpfung als Überlagerung auf den Statorspannungssollwert für einen Inverter des Antriebs erfolgt;
Fig. 4 anhand eines Blockschaltbildes eine weitere Ausführungsform, bei der die Integration einer Geräuschdämpfung als Überlagerung eines periodischen Drehmomentänderungssignals auf den Drehmomentsollwert erfolgt; und
Fig. 5 anhand eines Blockschaltbildes eine weitere Ausführungsform, bei der die Integration einer Geräuschdämpfung als Überlagerung auf den Spannungssollwert für einen Pulswechselrichter des Antriebs erfolgt.

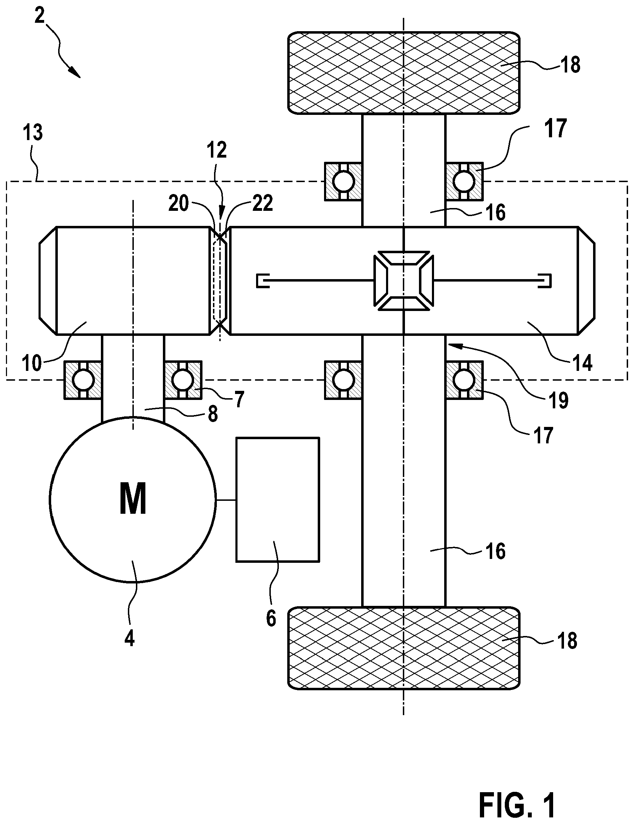

Figur 1 zeigt schematisch einen Fahrzeugantriebsstrang 2 eines Elektrokraftfahrzeugs. Das Elektrokraftfahrzeug weist keinen verbrennungsmotorischen Antrieb auf und weist insoweit ausschließlich einen elektromotorischen Antrieb 4 auf. Der Antrieb 4 ist insbesondere als umrichtergeführter Synchronmotor ausgeführt. Je nach Kraftfahrzeugtyp kann der elektromotorische Antrieb 4 alternativ auch als Gleichstrommotor oder als umrichtergeführter Asynchronmotor ausgeführt sein. Eine weitere Alternative für den Antrieb 4 ist eine geschaltete Reluktanzmaschine, die auch als "switched reluctance motor", kurz SRM bezeichnet wird. Ferner kann ein Transversalflussmotor als Antrieb 4 eingesetzt werden.

Das Antriebsmoment und die Drehzahl des Antriebs 4 sind mittels eines Steuergeräts 6 veränderlich, das insoweit zur Ansteuerung des Antriebs 4 vorgesehen ist.

Eine mittels eines Wälzlagers 7 drehbar gelagerte Ausgangswelle 8 des Antriebs 4 ist mit einem ersten Zahnrad 10 einer verzahnten Getriebestufe 12 drehfest verbunden, die innerhalb eines Getriebegehäuses 13 angeordnet ist. Das erste Zahnrad 10 kämmt mit einem zweiten Zahnrad 14 der Getriebestufe 12. Das zweite Zahnrad 14 ist über ein Differentialgetriebe mit zwei Antriebswellen 16 gekoppelt, die in Wälzlagern 17 gelagert und drehfest mit Fahrzeugrädern 18 verbunden sind.

Das erste Zahnrad 10 ist im Durchmesser kleiner als das zweite Zahnrad 14 und bildet insoweit ein Zahnritzel. Eine Drehzahl und ein Antriebsmoment des Antriebs 4 werden über die verzahnte Getriebestufe 12 für einen Abtrieb 19 gewandelt, der die Antriebswellen 16 aufweist. Mittels der Getriebestufe 12 wird die Drehzahl des Antriebs 4 in eine geringere Getriebe-Ausgangsdrehzahl übersetzt und das Antriebsmoment wird in ein höheres Getriebe-Ausgangsmoment übersetzt. Insofern kann ein Antrieb 4 verwendet werden, der zwar eine relative hohe Maximaldrehzahl, jedoch ein zu geringes Drehmoment aufweist.

Das zweite Zahnrad 14 beinhaltet das Differentialgetriebe, das das Getriebe-Ausgangsmoment gleichmäßig auf die beiden Fahrzeugräder 18 verteilt.

Alternativ kann die Getriebestufe 12 auch als Planetengetriebe und/oder als schaltbares Getriebe mit mehreren Stufen, insbesondere zwei Stufen, ausgeführt sein, die voneinander unterschiedliche Übersetzungen aufweisen. Der Fahrzeugantriebsstrang 2 kann auch als Radnabenmotor ausgeführt sein, der nur ein einziges Fahrzeugrad 18 antreibt.

Die Zahnräder 10, 12 sind geradeverzahnt oder schrägverzahnt. Die Zähne 20, 22 der Zahnräder 10, 12 kämmen jedenfalls miteinander. Das System aus den beiden ineinander eingreifenden Zahnrädern 10, 12 mit einer variablen Zahnsteifigkeit stellt einen Zweimassenschwinger mit variabler Federkonstante dar.

Das erste Zahnrad 10 weist eine erste Massenträgheit auf und das zweite Zahnrad 12 weist eine zweite Massenträgheit auf. Mithin bilden die beiden Zahnräder 10, 12 den Zweimassenschwinger, der mit variabler drehwegabhängiger Frequenz, einer Zahneingriffsfrequenz, schwingt.

Durch die variable Zahnsteifigkeit der Zähne werden an den sich kämmenden Zahnrädern 10, 12 Schwingungen beim Rotieren angeregt, welche über die Zahnräder 10, 12, die Wellen 8, 16 und die Wälzlager 7, 17 auf das Getriebegehäuse 13 übertragen und dort von einer vibrierenden Oberfläche als Geräusch abgestrahlt werden. Neben den rotativen Schwingungen schwingen die Zahnräder 10, 12 auch translatorisch mit den Lagern 7, 17 gegen das Getriebegehäuse 13, wodurch die Geräusche verursacht werden. Hier wird das Getriebegehäuse 13 über die Lager 7, 17 zu translatorischen Schwingungen angeregt, sodass sich in der Luft Schallwellen in Form von Druck- und Dichteschwankungen fortpflanzen. Die variable Zahneingriffskraft greift im Schnittpunkt der beiden Zahnräder 10, 12 ein und wirkt tangential auf das jeweilige Zahnrad 10 bzw. 12. Diese Kraft muss über das jeweilige Lager 7 bzw. 17 abgestützt werden.

Das Steuergerät 6 weist eine Regelung auf, welche auf der Einprägung, d.h. Überlagerung einer periodischen additiven Drehmomentschwingung über den elektrischen Antrieb 4 zur Dämpfung unerwünschter Geräusche mit der Zahneingriffsfrequenz beim Betrieb des Elektrokraftfahrzeugs beruht. Hierzu wird ein periodisches Drehmomentänderungssignal einem Ansteuerungssignal des Antriebs 4 überlagert. Das periodische Drehmomentänderungssignal verringert und verstärkt wechselweise das Antriebsmoment. Dabei ist das periodische Drehmomentänderungssignal in Phase mit der Zahnsteifigkeit der in den Kraftfluss geschalteten Getriebestufe 12. Das Ansteuerungssignal kann insbesondere ein Drehmomentregelsignal oder auch ein Ausgangsspannungssignal einer Drehmomentregelung sein. Diese Drehmomentregelung kann insbesondere feldorientiert, d.h. eine Vektorregelung sein. Durch eine feldorientierte Regelung wird erreicht, dass mit einem im Steuergerät 6 vorgesehenen Frequenzumrichter die Drehzahl- und Positioniergenauigkeit verbessert wird.

Dieses Drehmomentänderungssignal hat idealerweise keinen Gleichanteil oder einen Gleichanteil von null. Das Drehmomentänderungssignal erhöht oder reduziert ein übertragenes Gesamtmoment, das sich aufgrund des Drehmomentregelsignals und des Antriebssteuerungssignals am Antrieb 4 einstellt. Dabei bestimmt die Zahnsteifigkeit der augenblicklich im Zahneingriff befindlichen Zähne 20, 22, ob das Gesamtmoment erhöht oder reduziert wird. Im Mittel wird daher das vom Fahrer angeforderte Ausgangsdrehmoment, welches von der parallel arbeitenden Drehmomentregelung eingestellt wird, nicht geändert. Das periodische Drehmomentänderungssignal kann den exakten Verlauf der Drehmomentschwankung nachbilden oder beispielsweise durch ein Sinussignal gleicher Phase und Frequenz angenähert werden.

Da sich der Einfluss der Zahnsteifigkeitsänderung mit einem vom Fahrer angeforderten Getriebe-Ausgangsmoment ändert, muss die Amplitude, d.h. eine Signalstärke, des Drehmomentregelsignals entsprechend mit dem angeforderten Getriebe-Ausgangsmoment angepasst werden.

Nachfolgend wird die Regelung mittels des Steuergeräts 6 anhand regelungstechnischer Größen näher erläutert.

Durch die Addition eines periodischen stationären Drehmomentsollwert- oder Spannungssollwertsignals auf ein Ausgangssignal des beispielsweise feldorientierten Drehmoment- oder Stromreglers wird ein Getriebegeräusch mit der Zahneingriffsfrequenz gedämpft. Die Steifigkeitsänderung über dem Drehweg wirkt wie eine Schwingungsanregung für den Zweimassenschwinger bei konstantem Drehmoment. D.h., die jeweils miteinander im Eingriff befindlichen Zähne werden zu Schwingungen gegeneinander angeregt. Dieser Anregung wirkt nun die Modulation des Drehmoments des Antriebs 4 entgegen. Dazu wird eine Signalstärke des Antriebssteuerungssignals leicht verringert, wenn sich die Zahnsteifigkeit verringert. Hingegen wird eine Signalstärke des Antriebssteuerungssignals leicht erhöht, wenn sich die Zahnsteifigkeit erhöht.

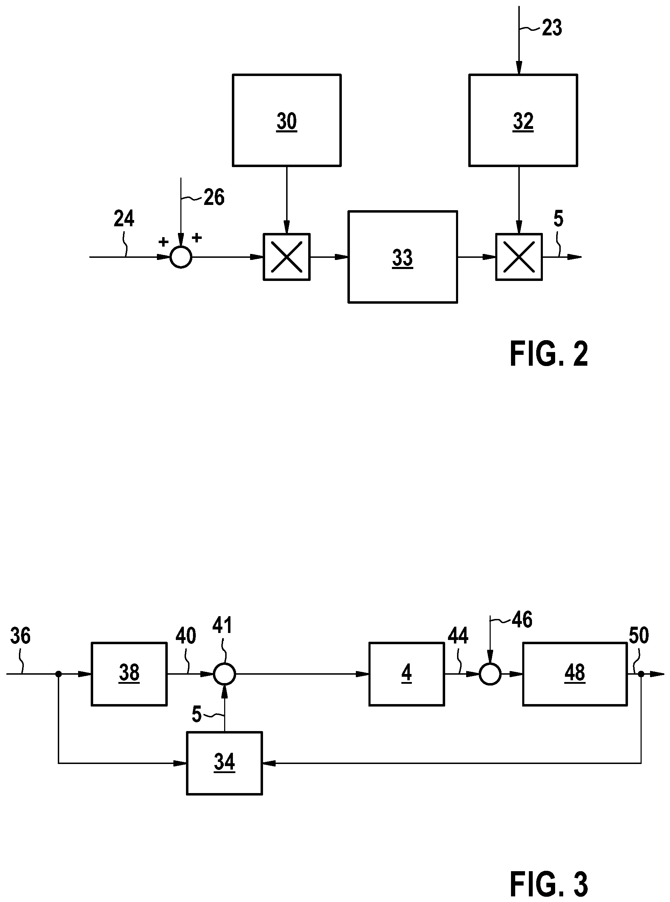

In Fig. 2 ist anhand eines Blockschaltbildes eine erste Ausführungsform des Verfahrens dargestellt. Das Drehmomentänderungssignal 5 ist stationär nachgebildet. Es wird keine Regelgröße zurückgekoppelt, sodass es sich im Beispiel um eine Steuerung handelt. Eingangsgrößen sind das Drehmoment 23 und die Rotorposition 24 des Antriebs. Auf diese Rotorposition 24 wird eine Offsetposition 26 addiert. In die Steuerung geht die Zähnezahl 30 der Zahnräder ein. Das Drehmoment 23 als Eingangsgröße kann im Modell über eine Transferfunktion 32 der Drehamplitude dargestellt werden. Hauptbestimmungsgröße des stationären Drehmomentänderungssignals ist eine Sinusfunktion 33. Ausgangsgröße ist das Drehmomentänderungssignal 5 zur Dämpfung der Schwingungen.

Fig. 3 zeigt anhand einer zweiten Ausführungsform die Integration der Geräuschdämpfung 34 als Aufschaltung auf den Statorspannungssollwert 40 für ein als Inverter ausgeführtes Steuergerät des Antriebs 4. Dabei wird anstelle der Sinusfunktion eine zweidimensionale Tabelle verwendet, die den passenden Drehmomentsollwert 36 des Antriebs über der Rotorposition und dem Drehmoment ausgibt. Hierfür sind verschiedene periodische Signale denkbar. Beispielsweise kann entweder eine Rechteckfunktion oder eine tabellarisch hinterlegte Sinusfunktion verwendet werden. Sinus- und Rechteckfunktion sind jeweils einfach zu implementieren. Erfindungsgemäß ist die Zahnsteifigkeit möglichst exakt nachgebildet und in der Tabelle abgelegt. Gemäß einer Alternative der Erfindung ist die Zahnsteifigkeit mit einer Funktion angenähert. So sind in Fig. 3 mögliche Integrationen der Geräuschdämpfung 34 in einer bestehenden feldorientierten Drehmomentregelung 38 oder Stromregelung gezeigt.

In die feldorientierte Drehmomentregelung 38 geht als Eingangsgröße der Drehmomentsollwert 36 ein. Als Ausgangsgröße wird von der feldorientierten Drehmomentregelung 38 der Statorspannungssollwert 40 ausgegeben, der insofern das Ansteuerungssignal des Antriebs 4 darstellt. Dieser Statorspannungssollwert 40 wird gemeinsam mit einem Drehmomentänderungssignal 5, das der Ausgangswert der Geräuschdämpfung 34 ist, auf einem Summationsknotenpunkt 41 aufaddiert. Das Ergebnis dieser Summation wird als Eingangswert dem elektrischen Antrieb 4 zugeführt, der zur Modellierung mittels einer Transferfunktion beschrieben werden kann. Der elektrische Antrieb 4 hat ein Antriebsdrehmoment 44. Auf dieses Antriebsdrehmoment 44 wirkt der Verzahnungseingriff als Störgröße 46 ein. Die Frequenz der Schwingungsanregung der ineinander eingreifenden Zahnräder der Getriebestufe kann im Modell durch eine Transferfunktion 48 beschrieben werden. Ausgangsgröße der Transferfunktion 48 ist das Ausgangssignal des mechanischen Systems, das insbesondere die Geschwindigkeit 50 des elektrischen Fahrzeugs oder die Oberflächengeschwindigkeit der Getriebestufe sein kann. Dieses Ausgangssignal des mechanischen Systems ist zudem eine Eingangsgröße der Geräuschdämpfung 34.

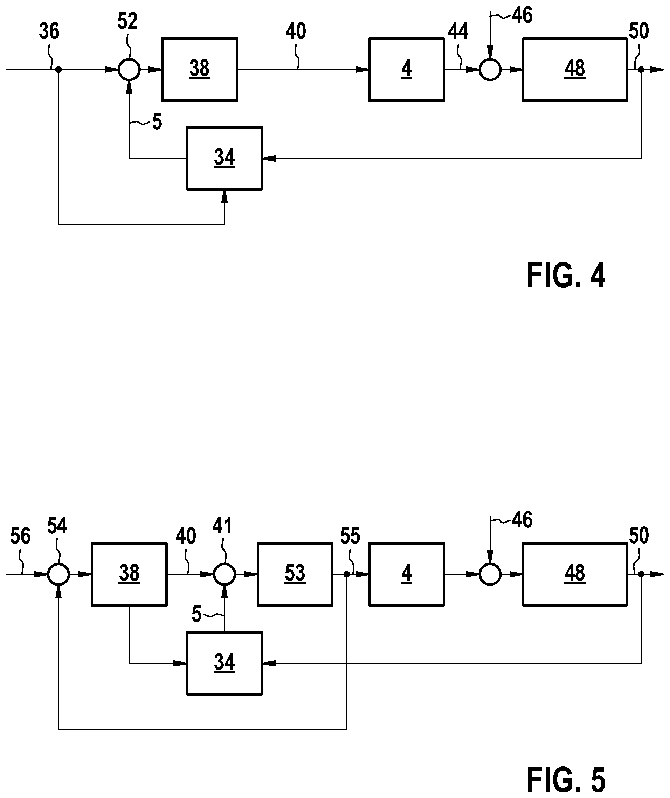

Aus Fig. 4 geht eine dritte Ausführungsform hervor, die eine Weiterentwicklung gegenüber der zweiten Ausführungsform darstellt. Die Geräuschdämpfung 34 ist in das Steuergerät integriert, indem ein periodisches Drehmomentänderungssignal 5 auf den Drehmomentsollwert 36 aufsummiert ist. Als Eingangswerte werden die Rotorposition und der Sollwert des Drehmoments verwendet. Im Gegensatz zum zweiten Ausführungsbeispiel nach Fig. 3 wird das von der Geräuschdämpfung 34 ausgegebene Drehmomentänderungssignal 5 gemeinsam mit dem Drehmomentsollwert 36 auf einen Summationsknotenpunkt 52 geführt, dessen Ausgangswert den Eingangswert der feldorientierten Drehmomentregelung 38 bildet. Hiermit wird verhindert, dass die feldorientierte Drehmomentregelung 38 das Signal der Geräuschdämpfung 34 wieder ausregelt, da diese Schwingung der Drehzahl oder des Drehmoments für die feldorientierte Drehmomentregelung 38 eine Störung darstellt. Wenn die Auswirkung der Geräuschdämpfung 34 auf das Drehzahlsignal mit einem Modell nachgebildet wird und vom Messwert für die feldorientierte Drehmomentregelung 38 abgezogen wird, so wird die feldorientierte Drehmomentregelung 38 die Geräuschdämpfung 34 nicht als Störgröße sehen und ausregeln. Diese Ausregelung erfolgt besonders bei kleinen Drehzahlen, da hier die Dynamik der feldorientierten Drehmomentregelung 38 zur Ausregelung ausreicht. Weiter im Gegensatz zum zweiten Ausführungsbeispiel ist kein Summationsknotenpunkt zwischen der feldorientierten Drehmomentregelung 38 und dem Antrieb 4 vorgesehen.

Fig. 5 zeigt eine vierte Ausführungsform, die ebenfalls eine Weiterentwicklung gegenüber der zweiten Ausführungsform darstellt. Die Geräuschdämpfung 34 ist in das Steuergerät des Antriebs 4 integriert.

Die Geräuschdämpfung 34 überlagert das Drehmomentänderungssignal 5 dem Statorspannungssollwert 40 für einen Pulswechselrichter 53. Als Eingangsgrößen werden wieder die Rotorposition und Drehmomentwert der feldorientierten Drehmomentregelung 38 verwendet.

Im Gegensatz zur zweiten und zur dritten Ausführungsform wird ein Ausgangssignal der feldorientierten Drehmomentregelung 38 direkt der Geräuschdämpfung 34 zugeführt. Außerdem wird im Gegensatz zur zweiten Ausführungsform die an den Antrieb 4 angelegte Spannung 55 abgegriffen und auf einen weiteren Summationsknotenpunkt 54 zurückgeführt, an dem diese Spannung 55 mit dem Stromstärkesollwert 56 des Antriebs 4 aufsummiert wird, wobei das Ergebnis dieser Summation als Eingangswert auf die feldorientierte Drehmomentregelung 38 geführt wird. Der Pulswechselrichter 53 erhält als Eingangswert vom Summationsknotenpunkt 41 eine Summation aus dem Statorspannungssollwert 40 und dem Drehmomentänderungssignal 5 der Geräuschdämpfung 34. Der Pulswechselrichter 53 steuert den Antrieb 4 an.

Das vorstehend dargestellte Verfahren zum Betrieb eines Fahrzeugantriebsstrangs kann als Teil Achssystem oder als Softwareoption mit einem Pulswechselrichter oder Steuergerät ausgeführt sein und insofern eine Fahrzeugkomponente darstellen.

## Patentansprüche

1. Verfahren zum Betrieb eines Antriebsstrangs mit elektromotorischem Antrieb (4), wobei
eine Drehzahl und ein Antriebsmoment des Antriebs (4) über eine verzahnte Getriebestufe (12) für einen Abtrieb (19) wandelbar sind, und
der Antrieb (4) mit einem Ansteuerungssignal (40) angesteuert wird, wobei dem Ansteuerungssignal (40) ein periodisches Drehmomentänderungssignal (5) überlagert wird, das das Antriebsmoment wechselweise verringert und verstärkt und dabei in Phase mit einer Zahnsteifigkeitsänderung der verzahnten Getriebestufe (12) ist, wobei eine Signalstärke des Drehmomentänderungssignals (5) bei sich verringernder Zahnsteifigkeit geringer ist als bei sich erhöhender Zahnsteifigkeit, **dadurch gekennzeichnet, dass** das periodische Drehmomentänderungssignal (5) die Zahnsteifigkeit nachbildet und in einer Tabelle abgelegt ist oder durch eine mathematische Funktion beschrieben ist, mit der die Zahnsteifigkeit angenähert ist.

2. Verfahren nach Anspruch 1, **dadurch gekennzeichnet, dass** das Ansteuerungssignal (40) ein Drehmomentregelsignal einer Drehmomentregelung (38) oder ein Ausgangsspannungssignal einer Drehmomentregelung (38) ist.

3. Verfahren nach Anspruch 2, **dadurch gekennzeichnet, dass** das Ausgangsspannungssignal oder das Drehmomentregelsignal der Drehmomentregelung einer feldorientierten Drehmomentregelung (38) oder Stromregelung zugehörig ist.

4. Verfahren nach einem der Ansprüche 1 bis 3, **dadurch gekennzeichnet, dass** das periodische Drehmomentänderungssignal (5) dem Ansteuerungssignal (40) in Abhängigkeit von einem Drehmomentsollwert (36) oder einer Rotorposition (24) des Antriebs (4) überlagert wird.

5. Verfahren nach einem der vorhergehenden Ansprüche, **dadurch gekennzeichnet, dass** das periodische Drehmomentänderungssignal (5) eine Sinusform aufweist.

6. Verfahren nach Anspruch 4 oder einer Kombination der Ansprüche 4 und 5, **dadurch gekennzeichnet, dass** das Drehmomentänderungssignal (5) gemeinsam mit dem Drehmomentsollwert (36) auf einen Summationsknotenpunkt (52) geführt wird, der einen Ausgangswert aufweist, der einen Eingangswert der feldorientierten Drehmomentregelung (38) derart bildet, dass verhindert wird, dass die feldorientierte Drehmomentregelung (38) das Signal einer Geräuschdämpfung (34) wieder ausregelt.

7. Verfahren nach einem der vorhergehenden Ansprüche, **dadurch gekennzeichnet, dass** ein Gleichwert des periodisches Drehmomentänderungssignals (5) gleich null ist.

8. Fahrzeugantriebsstrang mit elektromotorischem Antrieb, umfassend:
einen Antrieb (4), dessen Antriebsmoment und dessen Drehzahl veränderlich sind,
eine verzahnte Getriebestufe (12), die zur Wandlung der Drehzahl und des Antriebsmoments an den Antrieb (4) koppelbar ist,
ein Steuergerät (6) zur Ansteuerung des Antriebs (4) mit einem Ansteuerungssignal (40),
wobei das Steuergerät (6) konfiguriert ist, dem Ansteuerungssignal (40) ein periodisches Drehmomentänderungssignal (5) zu überlagern, das das Antriebsmoment wechselweise verringert und verstärkt und dabei in Phase mit einer Zahnsteifigkeitsänderung der verzahnten Getriebestufe (12) ist, und dass eine Signalstärke des Drehmomentänderungssignals (5) bei sich verringernder Zahnsteifigkeit geringer ist als bei sich erhöhender Zahnsteifigkeit, **dadurch gekennzeichnet, dass** das periodische Drehmomentänderungssignal (5) die Zahnsteifigkeit nachbildet und in einer Tabelle abgelegt ist oder durch eine mathematische Funktion beschrieben ist, mit der die Zahnsteifigkeit angenähert ist.

9. Fahrzeugantriebsstrang nach Anspruch 8, **dadurch gekennzeichnet, dass** das Ansteuerungssignal (40) ein Drehmomentregelsignal einer Drehmomentregelung (38) oder ein Ausgangsspannungssignal einer Drehmomentregelung (38) ist.

## Claims

1. Method for operating a drive train having an electromotive drive (4), wherein
a rotational speed and a drive torque of the drive (4) can be converted via a toothed gear stage (12) for an output (19), and
the drive (4) is controlled by a control signal (40), wherein a periodic torque change signal (5) is superimposed on the control signal (40), which periodic torque change signal alternately reduces and increases the drive torque and in the process is in phase with a change in tooth stiffness of the toothed gear stage (12), wherein a signal strength of the torque change signal (5) with a decreasing tooth stiffness is lower than with an increasing tooth stiffness, **characterized in that** the periodic torque change signal (5) simulates the tooth stiffness and is stored in a table or is described by a mathematical function with which the tooth stiffness is approximated.

2. Method according to Claim 1, **characterized in that** the control signal (40) is a torque control signal of a torque control operation (38) or an output voltage signal of a torque control operation (38).

3. Method according to Claim 2, **characterized in that** the output voltage signal or the torque control signal of the torque control operation is associated with a field-oriented torque control operation (38) or current control operation.

4. Method according to any of Claims 1 to 3, **characterized in that** the periodic torque change signal (5) is superimposed on the control signal (40) depending on a torque setpoint value (36) or a rotor position (24) of the drive (4).

5. Method according to any of the preceding claims, **characterized in that** the periodic torque change signal (5) has a sinusoidal form.

6. Method according to Claim 4 or a combination of Claims 4 and 5, **characterized in that** the torque change signal (5) together with the torque setpoint value (36) is passed to a summation node (52), which has an output value that forms an input value for the field-oriented torque control operation (38) in such a way that the field-oriented torque control operation (38) is prevented from re-adjusting the signal of a noise damping operation (34).

7. Method according to any of the preceding claims, **characterized in that** an equivalent value of the periodic torque change signal (5) is equal to zero.

8. Vehicle drive train having an electromotive drive, comprising:
a drive (4), the drive torque and the rotational speed of which are variable,
a toothed gear stage (12), which can be coupled to the drive (4) to convert the rotational speed and the drive torque,
a controller (6) for controlling the drive (4) with a control signal (40),
wherein the controller (6) is configured to superimpose a periodic torque change signal (5) on the control signal (40), which periodic torque change signal alternately reduces and increases the drive torque and in the process is in phase with a change in tooth stiffness of the toothed gear stage (12), and in that a signal strength of the torque change signal (5) with a decreasing tooth stiffness is lower than with an increasing tooth stiffness, **characterized in that** the periodic torque change signal (5) simulates the tooth stiffness and is stored in a table or is described by a mathematical function with which the tooth stiffness is approximated.

9. Vehicle drive train according to Claim 8, **characterized in that** the control signal (40) is a torque control signal of a torque control operation (38) or an output voltage signal of a torque control operation (38).

## Revendications

1. Procédé permettant de faire fonctionner une chaîne cinématique à entraînement électromoteur (4), dans lequel
une vitesse de rotation et un couple d'entraînement du dispositif d'entraînement (4) peuvent être variés par l'intermédiaire d'un étage de transmission denté (12) pour un dispositif d'entraînement (19), et
le dispositif d'entraînement (4) est piloté par un signal de pilotage (40), dans lequel un signal de modification de couple (5) est superposé au signal de pilotage (40), le couple d'entraînement est alternativement diminué et augmenté tout en étant en phase avec une modification de rigidité de denture de l'étage de transmission (12) denté, dans lequel une intensité de signal du signal de modification de couple (5) est pour une rigidité de denture décroissante inférieure à celle pour une rigidité de denture croissante, **caractérisé en ce que** le signal de modification de couple périodique (5) reproduit la rigidité de denture et est mémorisé dans une table ou est décrit par une fonction mathématique qui permet d'approximer la rigidité de denture.

2. Procédé selon la revendication 1, **caractérisé en ce que** le signal de pilotage (40) est un signal de régulation de couple d'un dispositif de régulation de couple (38) ou un signal de tension de sortie d'un dispositif de régulation de couple (38).

3. Procédé selon la revendication 2, **caractérisé en ce que** le signal de tension de sortie ou le signal de régulation de couple du dispositif de régulation de couple appartient à un dispositif de régulation de couple (38) ou de courant à orientation de champ.

4. Procédé selon l'une quelconque des revendications 1 à 3, **caractérisé en ce que** le signal de modification de couple périodique (5) est superposé au signal de pilotage (40) en fonction d'une valeur de consigne de couple (36) ou d'une position de rotation (24) du dispositif d'entraînement (4).

5. Procédé selon l'une quelconque des revendications précédentes, **caractérisé en ce que** le signal de modification de couple périodique (5) présente une forme sinusoïdale.

6. Procédé selon la revendication 4 ou une combinaison des revendications 4 et 5, **caractérisé en ce que** le signal de modification de couple (5) est amené conjointement avec la valeur de consigne de couple (36) vers un nœud de sommation (52) qui présente une valeur de départ qui constitue une valeur d'entrée de la régulation de couple (38) à orientation de champ de telle sorte que la régulation de couple (38) à orientation de champ régule à nouveau parfaitement le signal d'un dispositif d'atténuation de bruit (34).

7. Procédé selon l'une quelconque des revendications précédentes, **caractérisé en ce qu'**un équivalent du signal de modification de couple périodique (5) est égal à zéro.

8. Chaîne cinématique de véhicule à entraînement électromoteur, comprenant :
un dispositif d'entraînement (4) dont le couple d'entraînement et la vitesse de rotation sont variables,
un étage de transmission denté (12) qui peut être couplé au dispositif d'entraînement (4) pour faire varier la vitesse de rotation et le couple d'entraînement,
un appareil de commande (6) pour piloter le dispositif d'entraînement (4) par un signal de pilotage (40),
dans lequel l'appareil de commande (6) est configuré pour superposer au signal de pilotage (40) un signal de modification de couple périodique (5) qui diminue et augmente alternativement le couple d'entraînement tout en étant en phase avec une modification de rigidité de denture de l'étage de transmission denté (12), et une intensité de signal du signal de modification de couple (5) pour une rigidité de denture décroissante est inférieure à celle pour une rigidité de denture croissante, **caractérisé en ce que** le signal de modification de couple périodique (5) reproduit la rigidité de denture et est mémorisé dans une table ou est décrit par une fonction mathématique qui permet d'approximer la rigidité de denture.

9. Chaîne cinématique de véhicule selon la revendication 8, **caractérisé en ce que** le signal de pilotage (40) est un signal de régulation de couple d'un dispositif de régulation de couple (38) ou un signal de tension de sortie d'un dispositif de régulation de couple (38).
